# EUROPEAN PATENT SPECIFICATION

(11) **EP 2 324 946 B1**
(45) Date of publication and mention of the grant of the patent: **15.01.2014**
(21) Application number: 10251978.2
(22) Date of filing: 22.11.2010
(51) Int. Cl.: B23K 1/00, B23K 1/19

(54) **Method of joining graphite fibers to a substrate via brazing ; corresponding metallic-graphite structure**
Verfahren zur Lotverbindung von Graphitfasern an ein Substrat ; entsprechende Metall-Graphitstruktur
Procédé pour assembler par brasage des fibres de graphite à un substrat ; structure métal/graphite correspondante

(30) Priority: 23.11.2009 US 623705
(43) Date of publication of application: 25.05.2011
(73) Proprietor: Hamilton Sundstrand Space Systems International, Inc., Windsor Locks, CT 06096 (US)
(72) Inventor: Beringer, Durwood M., Suffield CT 06078 (US)
(74) Representative: Tomlinson, Kerry John

(56) References cited:
- US-A- 4 990 402
- US-A- 6 047 876
- US-A1- 2004 222 090

## Description

The subject matter disclosed herein generally relates to graphite fibers joined to a substrate material. More particularly, the subject matter disclosed herein relates to graphite fiber and substrate structures for heat exchanger systems.

US2004/222090 A1, representing the most relevant state of the art, describes a method of assembling a metallic-graphite structure comprising the steps of arranging one or more layers of graphite fiber material, locating at least one metallic sheet adjacent to the one or more layers of graphite fiber material, and securing the at least one metallic sheet to the one or more layers of graphite fiber material via brazing.

US 6047876 discloses a process for use in the construction or repair of heat exchangers comprising soldering a copper sheet onto a support made of carbon fiber-reinforced graphite.

Fibercore graphite is another material utilized, for example, in heat exchange applications. The material comprises an array of graphite fibers with a filler of a wax material therebetween. Large pieces of the fibercore are typically bonded to a desired surface, for example, an aluminum component, via an adhesive. Thermal mismatch issues are common between bulk graphite and graphite foam when joined to a metallic substrate. Fibercore graphite is not a monolithic structure and as such accommodates the thermal mismatch by translating with the substrate during thermal processing. Further, the thickness of the fibercore, which is relative to a length of the graphite fibers in the fibercore, is limited due to capability of graphite fiber production. The relatively thin fibercore material is fragile and is subject to breakage and damage when handling and/or shaping by machining or the like into desired shapes. The art would well receive a more robust structure of fibercore, which is not as sensitive to handling and/or other processing and which improves the thermal mismatch issues that exist in current structures.

### BRIEF DESCRIPTION OF THE INVENTION

Viewed from a first aspect, the present invention provides a method of assembling a metallic-graphite structure as defined in claim 1.

Viewed from a second aspect, the present invention provides a metallic-graphite structure as defined in claim 9.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 is a cross-sectional view of an embodiment of a graphite fiber heat dissipative structure;

FIG. 2 is a cross-sectional view of another embodiment of a graphite fiber heat dissipative structure; and

FIG. 3 is a cross-sectional view of yet another embodiment of a graphite fiber heat dissipative structure.

The detailed description explains embodiments of the invention, together with advantages and features, by way of example with reference to the drawings.

### DETAILED DESCRIPTION OF THE INVENTION

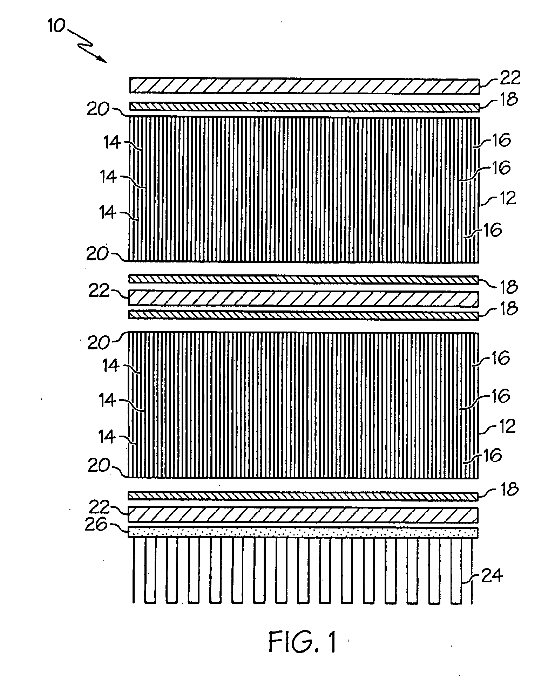

Shown in FIG. 1 is a cross-sectional view of an embodiment of a multi-layer fibercore graphite structure 10. The embodiment of FIG. 1 includes two fibercore graphite layers 12, but it is to be appreciated that other quantities of fibercore graphite layers 12, for example, one, three, five or more fibercore graphite layers 12 may be utilized in the structure 10. Each fibercore graphite layer 12 includes a plurality of graphite fibers 14, with the volume between the graphite fibers 14 occupied by a volume of wax 16. In one embodiment, the graphite fibers 14 are approximately 1.0 cm [0.40 inches] long, which results in a fibercore graphite layer 12 thickness of 1.0 cm [0.40 inches]. It is to be appreciated, though, that other lengths of graphite fibers 14, resulting in other thicknesses of fibercore graphite layers 12, may be utilized. In embodiments where longer graphite fibers 14 are utilized, the fibers may be arranged with a greater density to resist buckling of the graphite fibers 14.

A layer of braze filler 18, for example a BNi-2 filler, is utilized between the fibercore graphite layers 12 to join the layers of fibercore graphite 12. In this embodiment, a length of the graphic fibers 14 of the fibercore graphite layer 12 extends substantially from one layer of filler 18 to another layer of filler 18. In some embodiments, at each upper and lower end 20 of the assembly, a metallic sheet 22, which may be a nickel or other suitable material, is brazed to the filler 22. Additionally, in some embodiments, a metallic sheet 22 may be disposed between graphite layers 12 in the assembly. In embodiments where more than one fibercore graphite layer 12 is utilized, brazing of all layers 12 together may be accomplished in a single step. While the embodiments illustrated utilize a nickel metallic sheet 22 and a BNi-2 filler 18, in some embodiments, the metallic sheet 22 may be other nickel-based brazing alloys or of an alloy of titanium and titanium-containing fillers 18 may be utilized therewith.

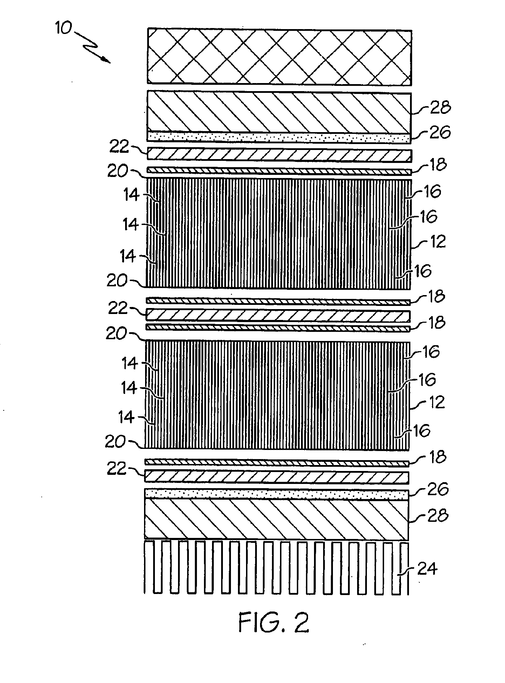

The sandwich structure is brazed to a substrate 24 formed from, for example, an aluminum material. Alternatively, the substrate 24 may be formed from other materials, such as stainless steel or nickel alloy where increased fluid combatibility is required, for example in a corrosive fluids environment. Brazing of the metallic sheet 22 to the substrate 24 is accomplished via an aluminum braze alloy 26 disposed between the metallic sheet 22 and the substrate 24. In some embodiments, as shown in FIG. 2, an endsheet 28 is located between the metallic sheet 22 and the substrate 24. The endsheet 28 is formed of, for example, aluminum multiclad, and is brazed to the metallic sheet 22 and the substrate 24 using aluminum braze alloy 26.

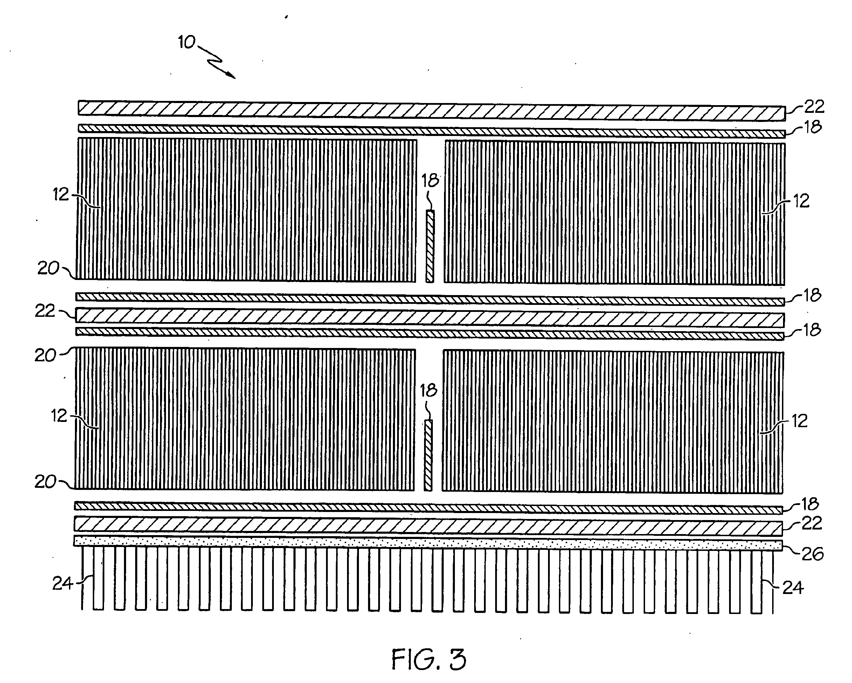

In some embodiments, as shown in FIG. 3, two or more fibercore graphite layers 12 may be arranged side-to-side and joined via brazing. In these embodiments, the metallic sheet 22 is omitted and only filler 18 is located between sides 30 of adjacent fibercore graphite layers 12. To accomplish the brazing operation, the filler 18 is located between the metallic sheet 22 and each fibercore graphite layer 12, wetting the graphite fibers 14. When joining fibercore graphite layers 12 side-to-side, the filler 18 extends only partially along the length of the graphite fibers 14. Leaving a portion of the joint uncovered by filler 18 allows for more efficient filling of the gaps between graphite fibers 14 with wax 16 in later processing after the fibercore graphite layers 12 are joined. Location of filler 18 may be alternated throughout an assembly to promote flow of the wax 16 through the fibercore graphite layer 12 when filled. As shown in FIG. 3, multiple layers may be constructed once the graphite layers 12 are joined side-to-side. The stack may include a metallic sheet 22 at the top and/or bottom of the assembly, and optionally a metallic sheet 22 may be disposed between fibercore graphite layers 12. In effect, a large brazed assembly of fibercore graphite layers 12, extending both in thickness and in length/width may be constructed.

The joining of ends of graphite fibers 14 to a metallic sheet 22 into the sandwich structure results in an effectively longer graphite fiber 14 length. The taller fibercore height may be packaged into a more cubic structure (vs. a flat plate) which requires less external support during vibrational loading. Further, the metallic sheet 22 / fibercore graphite layer 12 structure is less susceptible to handling damage and can be shaped by a variety of processes, for example, electrical discharge machining (EDM), to produce desired shapes to close tolerances.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method of assembling a metallic-graphite structure (10) **characterised by**:
arranging one or more layers of graphite fiber material (12), wherein each of the one or more layers of graphite material (12) comprises a plurality of graphite fibers (14) interposed with a volume of wax material (16);
locating at least one metallic sheet (18) adjacent to the one or more layers of graphite fiber material (12); and
securing the at least one metallic sheet (18) to the one or more layers of graphite fiber material (12) via brazing.

2. The method of Claim 1 comprising securing the at least one metallic sheet (18) to a heat exchanger (24) via brazing.

3. The method of Claim 2 wherein the heat exchanger (24) is formed from aluminum or an aluminum-containing alloy.

4. The method of Claim 1, 2 or 3 wherein a length of the plurality of graphite fibers (14) in the graphite fiber material (12) extends from a first metallic sheet (18) of the at least one metallic sheet (18) to a second metallic sheet (18) of the at least one metallic sheet (18).

5. The method of Claim 4 comprising stacking two or more layers of graphite fiber material (12) to increase an effective length of the plurality of graphite fibers (14).

6. The method of Claim 5, wherein at least one metallic sheet (18) is disposed between adjacent layers of the two or more layers of graphite fiber material (12).

7. The method of any preceding Claim wherein the at least one metallic sheet (18) is formed from a nickel material.

8. The method of any of Claims 1 to 6 wherein the at least one metallic sheet (18) is formed from a material containing titanium.

9. A metallic-graphite structure (10) **characterised by**:
one or more layers of graphite fiber material (12), wherein each of the one or more layers of graphite fiber material (12) comprises a plurality of graphite fibers (14) interposed with a volume of wax material (16); and
at least one metallic sheet (18) adjacent to the one or more layers of graphite fiber material (12) and secured thereto by brazing.

10. The metallic-graphite structure (10) of Claim 9 comprising a heat exchanger (24) secured to the at least one metallic sheet (18) via brazing; preferably wherein the heat exchanger (24) is formed from aluminum or an aluminum-containing alloy.

11. The metallic-graphite structure (10) of Claim 9 or 10 wherein a length of the plurality of graphite fibers (14) extends from a first metallic sheet (18) of the at least one metallic sheet (18) to a second metallic sheet (18) of the at least one metallic sheet (18).

12. The metallic-graphite structure (10) of Claim 11 comprising two or more layers of graphite fiber material (12) stacked to increase an effective length of the plurality of graphite fibers (14).

13. The metallic-graphite structure (10) of Claim 12, wherein at least one metallic sheet (18) is disposed between adjacent layers of the two or more layers of graphite fiber material (12).

14. The metallic-graphite structure (10) of any of Claims 9 to 13 wherein the at least one metallic sheet (18) is formed from a nickel material.

15. The metallic-graphite structure (10) of any of Claims 9 to 13 wherein the at least one metallic sheet (18) is formed from a material containing titanium.

## Patentansprüche

1. Verfahren zum Zusammenfügen einer Metall-Graphit-Struktur (10), **gekennzeichnet durch**:
Anordnen einer oder mehrerer Schicht(en) aus Graphitfasermaterial (12), wobei die eine oder mehreren Schicht(en) aus Graphitmaterial (12) jeweils eine Mehrzahl von Graphitfasern (14) umfasst/umfassen, zwischen denen ein Volumen an Wachsmaterial (16) vorliegt;
Anordnen wenigstens einer Blechtafel (18) benachbart zu der einen oder den mehreren Schicht(en) aus Graphitfasermaterial (12); und
Befestigen der wenigstens einen Blechtafel (18) an der einen oder den mehreren Schicht(en) aus Graphitfasermaterial (12) **durch** Hartlöten.

2. Verfahren nach Anspruch 1, umfassend die Befestigung der wenigstens einen Blechtafel (18) an einem Wärmetauscher (24) durch Hartlöten.

3. Verfahren nach Anspruch 2, wobei der Wärmetauscher (24) aus Aluminium oder einer aluminiumhaltigen Legierung ausgebildet ist.

4. Verfahren nach Anspruch 1, 2 oder 3, wobei sich eine Länge der Mehrzahl von Graphitfasern (14) in dem Graphitfasermaterial (12) von einer ersten Blechtafel (18) der wenigstens einen Blechtafel (18) zu einer zweiten Blechtafel (18) der wenigstens einen Blechtafel (18) erstreckt.

5. Verfahren nach Anspruch 4, umfassend das Schichten von zwei oder mehr Schichten aus Graphitfasermaterial (12) zur Verlängerung einer wirksamen Länge der Mehrzahl von Graphitfasern (14).

6. Verfahren nach Anspruch 5, wobei zwischen benachbarten Schichten der zwei oder mehr Schichten aus Graphitfasermaterial (12) wenigstens eine Blechtafel (18) angeordnet ist.

7. Verfahren nach einem vorangehenden Anspruch, wobei die wenigstens eine Blechtafel (18) aus einem Nickelmaterial ausgebildet ist.

8. Verfahren nach einem der Ansprüche 1 bis 6, wobei die wenigstens eine Blechtafel (18) aus einem titanhaltigen Material ausgebildet ist.

9. Metall-Graphit-Struktur (10), **gekennzeichnet durch**:
eine oder mehrere Schicht(en) aus Graphitfasermaterial (12), wobei die eine oder mehreren Schicht(en) aus Graphitfasermaterial (12) jeweils eine Mehrzahl von Graphitfasern (14) umfasst/umfassen, zwischen denen ein Volumen an Wachsmaterial (16) vorliegt; und
wenigstens eine Blechtafel (18), die der einen oder den mehreren Schicht(en) aus Graphitfasermaterial (12) benachbart und **durch** Hartlöten an dieser/diesen befestigt ist.

10. Metall-Graphit-Struktur (10) nach Anspruch 9, umfassend einen durch Hartlöten an der wenigstens einen Blechtafel (18) befestigten Wärmetauscher (24), wobei der Wärmetauscher (24) vorzugsweise aus Aluminium oder einer aluminiumhaltigen Legierung ausgebildet ist.

11. Metall-Graphit-Struktur (10) nach Anspruch 9 oder 10, wobei sich eine Länge der Mehrzahl von Graphitfasern (14) von einer ersten Blechtafel (18) der wenigstens einen Blechtafel (18) zu einer zweiten Blechtafel (18) der wenigstens einen Blechtafel (18) erstreckt.

12. Metall-Graphit-Struktur (10) nach Anspruch 11, umfassend zwei oder mehr Schichten aus Graphitfasermaterial (12), die zur Verlängerung einer wirksamen Länge der Mehrzahl von Graphitfasern (14) geschichtet sind.

13. Metall-Graphit-Struktur (10) nach Anspruch 12, wobei zwischen benachbarten Schichten der zwei oder mehr Schichten aus Graphitfasermaterial (12) wenigstens eine Blechtafel (18) angeordnet ist.

14. Metall-Graphit-Struktur (10) nach einem der Ansprüche 9 bis 13, wobei die wenigstens eine Blechtafel (18) aus einem Nickelmaterial ausgebildet ist.

15. Metall-Graphit-Struktur (10) nach einem der Ansprüche 9 bis 13, wobei die wenigstens eine Blechtafel (18) aus einem titanhaltigen Material ausgebildet ist.

## Revendications

1. Procédé d'assemblage d'une structure métallographite (10) **caractérisé par** :
l'agencement d'une ou plusieurs couches de matière de fibres de graphite (12), dans lequel chacune des une ou plusieurs couches de matière de graphite (12) comprend une pluralité de fibres de graphite (14) interposées avec un volume de matière de cire (16) ;
le placement d'au moins une feuille métallique (18) adjacente à la une ou plusieurs couches de matière de fibres de graphite (12) ; et
la fixation de l'au moins une feuille métallique (18) à la une ou plusieurs couches de matière de fibres de graphite (12) par brasage.

2. Procédé selon la revendication 1, comprenant la fixation de l'au moins une feuille métallique (18) à un échangeur thermique (24) par brasage.

3. Procédé selon la revendication 2, dans lequel l'échangeur thermique (24) est formé à partir d'aluminium ou d'un alliage contenant de l'aluminium.

4. Procédé selon la revendication 1, 2 ou 3, dans lequel une longueur de la pluralité de fibres de graphite (14) dans la matière de fibres de graphite (12) s'étend d'une première feuille métallique (18) de l'au moins une feuille métallique (18) à une seconde feuille métallique (18) de l'au moins une feuille métallique (18).

5. Procédé selon la revendication 4, comprenant l'empilage de deux ou plusieurs couches de matière de fibres de graphite (12) pour augmenter une longueur efficace de la pluralité de fibres de graphite (14).

6. Procédé selon la revendication 5, dans lequel la feuille métallique (18) est disposée entre des couches adjacentes des deux ou plusieurs couches de matière de fibres de graphite (12).

7. Procédé selon l'une quelconque des revendications précédentes dans lequel au moins une feuille métallique (18) est formée à partir d'une matière de nickel.

8. Procédé selon l'une quelconque des revendications 1 à 6, dans lequel l'au moins une feuille métallique (18) est formée d'une matière contenant du titane.

9. Structure métallographite (10) **caractérisée par** :
une ou plusieurs couches de matière de fibres de graphite (12), dans lesquelles chacune de l'une ou plusieurs couches de matière de fibres de graphite (12) comprend une pluralité de fibres de graphite (14) interposées avec un volume de matière de cire (16) ; et
au moins une feuille métallique (18) adjacente à la une ou plusieurs couches de matière de fibres de graphite (12) et fixée à celles-ci par brasage.

10. Structure métallographite (10) selon la revendication 9, comprenant un échangeur thermique (24) fixé à l'au moins une feuille métallique (18) par brasage ; de préférence dans laquelle l'échangeur thermique (24) est formé à partir d'aluminium ou d'un alliage contenant de l'aluminium.

11. Structure métallographite (10) selon la revendication 9 ou 10, dans laquelle une longueur de la pluralité de fibres de graphite (14) s'étend d'une première feuille métallique (18) de l'au moins une feuille métallique (18) à une seconde feuille métallique (18) de l'au moins une feuille métallique (18).

12. Structure métallographite (10) selon la revendication 11, comprenant deux ou plusieurs couches de matière de fibres de graphite (12) empilées pour augmenter une longueur efficace de la pluralité de fibres de graphite (14).

13. Structure métallographite (10) selon la revendication 12, dans laquelle la feuille métallique (18) est disposée entre des couches adjacentes des deux ou plusieurs couches de matière de fibres de graphite (12) .

14. Structure métallographite (10) selon l'une quelconque des revendications 9 à 13, dans laquelle l'au moins une feuille métallique (18) est formée à partir d'une matière de nickel.

15. Structure métallographite (10) selon l'une quelconque des revendications 9 à 13, dans laquelle l'au moins une feuille métallique (18) est formée d'une matière contenant du titane.
